Europäisches Patentamt

European Patent Office

Office européen des brevets

(11) Numéro de publication: **0 320 397**
**A1**

## DEMANDE DE BREVET EUROPEEN

(21) Numéro de dépôt: **88403130.3**

(22) Date de dépôt: **09.12.88**

(51) Int. Cl.⁴: **B 23 K 1/12**

(30) Priorité: **11.12.87 FR 8717278**

(43) Date de publication de la demande:
**14.06.89 Bulletin 89/24**

(84) Etats contractants désignés:
**DE ES FR GB IT SE**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Berthe, Xavier**
**39-41, rue Pierre Curie**
**F-91170 Viry-Chatillon (FR)**

**Guichard, Michel**
**14, Allée des Acacias**
**F-92310 Sèvres (FR)**

**Gosselet, Daniel**
**39, rue de Bonne**
**F-94000 Créteil (FR)**

**Chavignaud, Christian**
**11, rue Rouget de l'Isle**
**F-92150 Suresnes (FR)**

(54) **Dispositif d'entraînement auto-adaptatif pour l'alimentation de torches de soudage en fil de soudure.**

(57) Ce dispositif comprend :
- deux chaînes bouclées (5, 7) qui coopèrent entre elles pour entraîner un fil-électrode (11),
- un carter-support (15)- qui porte la chaîne supérieure motrice (7), un moto-réducteur ainsi qu'un ensemble de transmission et synchronisation,
- une platine mobile (6) articulée autour d'un axe-pivot (16), munie de deux embouts de gaine d'entrée (10A) et de sortie (10B), et portant la chaîne inférieure (5),
- et deux mécanismes presseurs supérieur (8) et inférieur (4) associés respectivement aux chaînes (7) et (5).
   **Application**: notamment aux procédés M.A.G., M.I.G. et au brasage.

FIG.1

EP 0 320 397 A1

## Description

# DISPOSITIF D'ENTRAINEMENT AUTO-ADAPTATIF POUR L'ALIMENTATION DE TORCHES DE SOUDAGE EN FIL DE SOUDURE

La présente invention se rapporte à un dispositif d'entraînement pour l'alimentation en fil de soudure de torches de soudage. Ce dispositif s'applique tout particulièrement aux procédés M.A.G., M.I.G. et au brasage.

Pour la mise en oeuvre de ces procédés, le mécanisme qui assure l'entraînement du fil est généralement la cause de difficultés de fonctionnement.

En règle générale, des galets cylindriques sont utilisés pour transmettre, par rotation sous une certaine pression, l'avancement du fil de façon plus ou moins continue.

La surface de contact du fil, vis-à-vis des deux ou quatre galets, est réduite, ce qui implique, pour obtenir un entraînement satisfaisant, l'application d'une force d'appui élevée au niveau des galets presseurs.

Les divers dispositifs constituant l'état de la technique sont principalement les suivants :
- 2 galets à gorge engrénés ensemble (cf. croquis 1 A),
- 2 paires de galets non engrénés, inférieurs à gorge, galets d'appui avec ou sans gorge (cf. croquis 2 A),
- 4 galets à gorge, engrénés entre eux.

### Les variantes sont les suivantes :

    a) la gorge d'entraînement et les galets d'appui lisses, ou en extrême
    b) 4 galets à gorge crantée (cf. croquis 3 A).

Les systèmes à 4 galets ont généralement un guide-fil intermédiaire reliant l'intervalle des galets, d'où la nécessité d'un bon alignement. De plus, ces systèmes requièrent un équilibrage très précis de l'effort des galets d'appui, ainsi qu'une tolérance étroite pour l'usinage du diamètre en fond de gorge.
- Une solution originale (brevet ESAB Suède) consiste à utiliser deux galets inférieurs à gorges multiples, et deux galets d'appui supérieurs montés sur un système palonné, engrénés par paires.

Chaque paire de galets est entraînée par son propre moteur, les deux moteurs étant couplés en série.

Ce système est fiable, car les couples moteurs s'additionnent, le glissement éventuel est électrique.

L'ensemble est toutefois lourd et encombrant, difficile à utiliser pour des unités compactes de soudage à l'arc.
- Une solution avec têtes d'entraînement planétaire. Il s'agit d'un mécanisme à galets obliques à profil spécifique, qui produit une réduction planétaire et transforme le mouvement rotatif du moteur en un mouvement relatif de translation du fil (brevet ISAPLAN Bulgarie).

L'ensemble moteur-mécanisme s'avère très compact, la force d'entraînement du fil élevée et la fonction dressage du fil intégrée et efficace.

Son exploitation se révèle néanmoins difficile en atelier de fabrication.

En conclusion, tous les systèmes décrits ci-dessus nécessitent pour chaque diamètre de fil (0,8 - 0,9 - 1,00 - 1,2 - 1,6 mm) une modification de réglage et d'équipements : galets, guide-fils, ceci au niveau de l'entraîneur.

De plus, la nature du matériau constituant le fil (aluminium, alliages cuivreux, etc.), peut exiger des équipement spécifiques, galets, guide-fils en nylon.

Ces nombreuses combinaisons peuvent entraîner, au niveau du choix, des interprétations sur les réglages risquant de provoquer de sérieux troubles de fonctionnement.

La complexité de l'équipement (état de surface de fil et encrassement des guidages non visibles de l'extérieur) rend difficile le diagnostic de ces situations d'anomalies.

La présente invention a pour but de créer un dispositif d'entraînement qui pallie les inconvénients des solutions connues en matière d'alimentation de fils de soudage.

Elle combine à cet effet, les avantages d'une paire de galets simples avec les performances d'un système à galets multiples, sans les difficultés de réalisation et d'utilisation de ce dernier.

Elle propose donc un tel dispositif d'entraînement du type adapté à tous types de fils, sans détérioration, marquage, écrasement ou ondulation de ceux-ci qui comprend, suivant une particularité essentielle :
- deux chaînes bouclées qui coopèrent entre elles pour entraîner un fil-électrode,
- un carter-support qui porte la chaîne supérieure motrice, un moto-réducteur ainsi qu'un ensemble de transmission et de synchronisation,
- une platine mobile articulée autour d'un axe-pivot, munie de deux embouts de gaine d'entrée et de sortie, et portant la chaîne inférieure,
- et deux mécanismes presseurs associés respectivement aux deux chaînes bouclées.

Suivant une autre particularité, les maillons de la chaîne bouclée supérieure sont individuellement doublés d'un mors d'entraînement mâle riveté qui coopère avec un mors d'entraînement femelle riveté à chaque maillon de la chaîne bouclée inférieure, pour entraîner le fil-électrode.

Ces deux particularités essentielles procurent un entraînement efficace de fils de soudure tous types tels que des fils pleins en acier doux ou aciers fortement alliés, des fils en alliages cuivreux, des fils tendres ou mous en aluminium et alliages, et des fils tubulaires garnis d'un flux (fils fourrés), et ceci, sans détérioration, marquage, écrasement ou ondulation.

Ces avantages sont inhérents au nombre important de points de contact d'entraînement sur le fil-électrode, par exemple quatre paires de mors en prise permanente.

D'autres avantages et particularités de l'invention ressortiront de la description qui suit d'un mode de réalisation préféré, donné à titre d'exemple non limitatif, en référence aux dessins annexés dans lesquels :

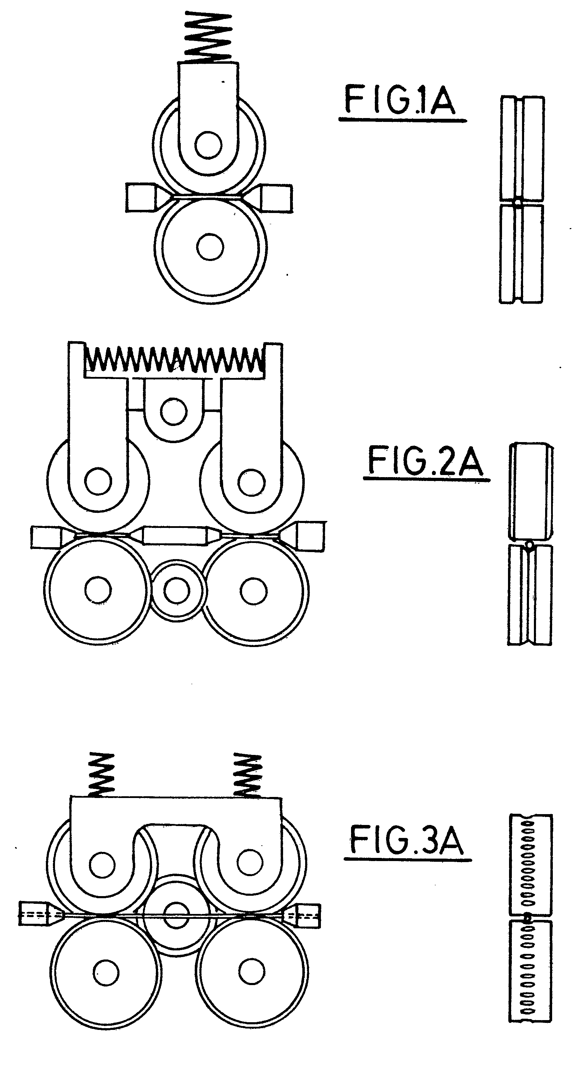

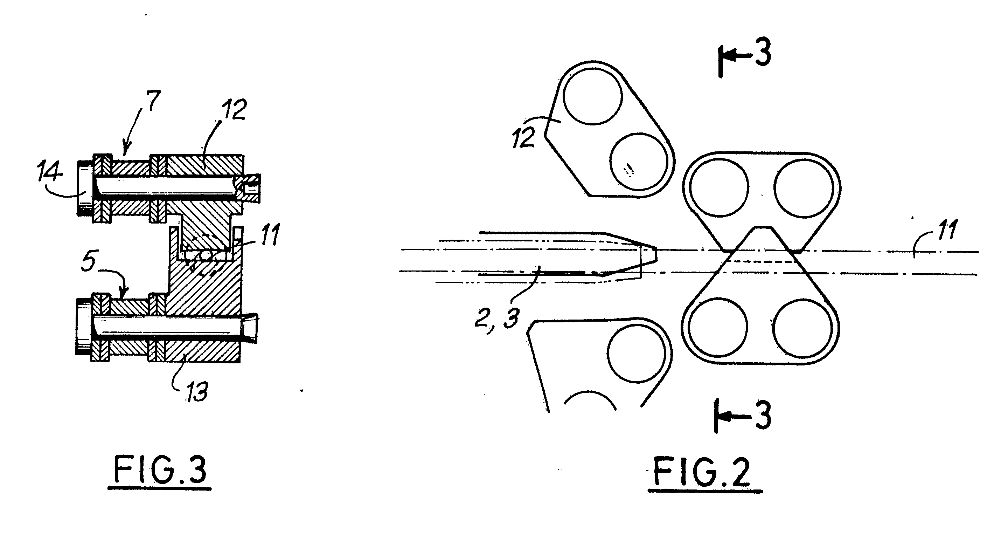

- les figures 1 A, 2 A, et 3 A représentent des dispositifs d'entraînement schématiques illustrant l'état de la technique,

- la figure 1 représente une vue en plan d'un dispositif d'entraînement conforme à l'invention,

- la figure 2 représente une vue de détail en plan montrant deux parties de chaîne au niveau d'un guide-fil, de ce dispositif,

- et la figure 3 représente une section suivant 3-3 de la figure 2.

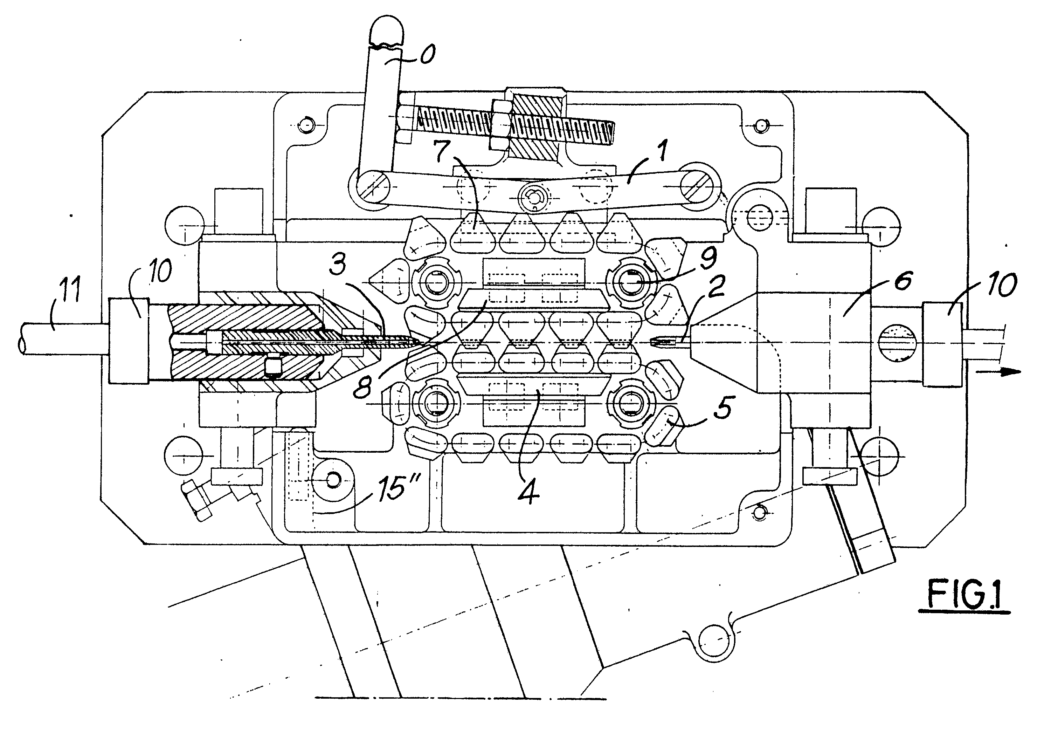

Comme l'illustre la figure 1, ce dispositif d'entraînement auto-adaptatif est constitué principalement de :

- deux chaînes bouclées 5, 7 miniaturisées qui coopèrent entre elles pour entraîner un fil-électrode 11,

- un carter-support 15 qui porte la chaîne supérieure motrice 7, un moto-réducteur ainsi qu'un ensemble de transmission et de synchronisation,

- une platine mobile 6 articulée autour d'un axe-pivot 16, munie de deux embouts de gaine d'entrée 10A et de sortie 10B, et portant la chaîne inférieure 5,

- et deux mécanismes presseurs supérieur 8 et inférieur 4 associés respectivement aux chaînes 7 et 5.

Les maillons de la chaîne bouclée supérieure 7 sont chacun doublés d'un mors d'entraînement mâle riveté 12 qui coopère avec un mors d'entraînement femelle 13 également riveté à chaque maillon de la chaîne bouclée inférieure 5, pour entraîner le fil-électrode 11.

Ces mors 12 et 13 en acier traité présentent une forme incurvée et sont fixés latéralement par des axes rivetés 14 ou de longues attaches rapides.

Chacune de ces chaînes bouclées 5, 7 est portée par une paire de roues dentées 9A, 9B.

Chaque mécanisme presseur 8, 4 comporte une rangée de poussoirs à rondelles élastiques calibrées, et un patin d'appui antagoniste.

Un mécanisme manuel 1 à leviers est adjoint au mécanisme presseur supérieur 8 comme dispositif de sécurité pour assurer la fonction d'ouverture urgente. Le fil-électrode 11 étant introduit de part et d'autre des guide-fils d'entrée 3 et de sortie 2, le levier O relâché libère l'action du mécanisme presseur 8.

L'équipage supérieur comprenant la chaîne 7, le mécanisme presseur 8 et la paire 9B de roues dentées est motorisé en rotation et non mobile axialement.

L'équipage inférieur comprenant la platine mobile 6, le mécanisme presseur 4 et la paire 9A de roues dentées peut pivoter pour permettre l'introduction automatique de fil-électrode, avec un mouvement synchrone de la chaîne 5.

Le mécanisme à chaîne supérieure est entraîné par un moteur à courant continu à vitesse variable et à faible inertie.

Un réducteur bi-étagé, ou une roue et vis sans fin, est nécessaire à l'obtention d'un rapport de vitesse convenable en sortie de mouvement.

Un embrayage électromagnétique peut être interposé pour favoriser l'accélération de départ et réduire l'inertie au freinage.

Une variante serait constituée avec un moteur adapté à commande pneumatique ou hydraulique afin de supprimer le réducteur et, par conséquent, réduire l'encombrement pour obtenir un outil le plus compact possible.

Cette solution permet l'embarquement au "plus près" de la torche de soudage.

Les avantages obtenus se révèlent significatifs :
- grande surface de contact sur le fil,
- pas de réglages lors du changement de fil,
- autocentrage du fil au plan axial des mors et "libre rotation" de celui-ci autour de son axe,
- ensemble compact compte tenu de ses performances d'entraînement par la miniaturisation de ses composants.
- Force d'entraînement accrue tout en réduisant les contraintes mécaniques sur le fil par la répartition de l'effort.
- Réduction de la puissance absorbée au niveau des paliers tournants.
- Reduction du glissement lors de la montée en régime du moto-réducteur.
- Pas de réglage à la suite d'un changement de fil électrode (diamètre et matière).
- Meilleur dressage du fil par rapport aux systèmes à deux ou quatre galets.
- Arrachements de métal ou décuivrage fortement diminués, absence de marques visibles à l'oeil nu sur les fils tendres.
- Départ et arrêt rapides du fil électrode en utilisant un embrayage-coupleur entre le moteur et le réducteur.
- Ce système est autostabilisé en effort. En fonction de sa position, la force d'appui se répartit uniformément sur toute la longueur du fil en contact avec le patin.

En cas de changement de section de fil ou de matière, le réglage de pression est auto-adaptatif. En conséquence, aucune action correctrice est nécessaire. Seul, le guide-fil de sortie ou d'entrée, extérieur au mécanisme d'entraînement est à adapter.
- Il présente la particularité d'offrir une bonne résistance statique au glissement longitudinal, et, paradoxalement, d'autoriser une rotation du fil sur son axe sous un faible couple.

Cette particularité favorise l'entraînement du fil à deux niveaux :

1) Meilleur impact d'arc. Stabilité du point visé par autopositionnement de plé du fil (cambrure rémanente) dans les rayons de courbure des gaines flexibles (liner) et du col de cygne de torche de soudage.

2) Réduction par ce fait d'une des principales causes de résistance à l'avancement du fil.

**Revendications**

1. Dispositif d'entraînement auto-adaptatif pour l'alimentation de torches de soudage en fil de soudure, du type assurant un entraînement efficace de fils tous types sans détérioration, marquage, écrasement ou ondulation de ceux-ci, caractérisé en ce qu'il comprend principalement :

- deux chaînes bouclées (5, 7) qui coopèrent entre elles pour entraîner un fil-électrode (11),
- un carter-support (15) qui porte la chaîne supérieure motrice (7), un moto-réducteur ainsi qu'un ensemble de transmission et synchronisation,
- une platine mobile (6) articulée autour d'un axe-pivot (16) munie de deux embouts de gaine d'entrée (1OA) et de sortie (10B), et portant la chaîne inférieure (5),
- et deux mécanismes presseurs supérieur (8) et inférieur (4) associés respectivement aux chaînes (7) et (5).

2. Dispositif suivant la revendication 1, caractérisé en ce que les maillons de la chaîne bouclée supérieure (7) sont individuellement doublés d'un mors d'entraînement mâle riveté (12) qui coopère avec un mors d'entraînement femelle (13) riveté à chaque maillon de la chaîne bouclée inférieure (5), pour entraîner le fil-électrode (11).

3. Dispositif suivant la revendication 1 ou 2, caractérisé en ce que chacune des deux chaînes bouclées (5, 7) est portée par une paire de roues dentées (9A, 9B).

4. Dispositif suivant l'une quelconque des revendications 1, 2 et 3, caractérisé en ce que chaque mécanisme presseur (8, 4) comporte une rangée de poussoirs à rondelles élastiques calibrées, et un patin d'appui antagoniste.

5. Dispositif suivant l'une quelconque des revendications 1 à 4 caractérisé en ce qu'un mécanisme manuel à leviers (1) est adjoint au mécanisme presseur supérieur (8) comme dispositif de sécurité.

FIG.1

EP 0 320 397 A1

FIG.1A

FIG.2A

FIG.3A

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| Y | US-A-2133970 (M. CHRISTENSEN ET AL.) <br> * le document en entier * | 1, 3, 5 | B23K1/12 |
| A |  | 2, 4 |  |
|  | --- |  |  |
| Y | US-A-3331545 (A.G. OLIVIERI) <br> * le document en entier * <br> --- | 1, 3, 5 |  |
| A | US-A-2915171 (C.C. PECK) <br> * le document en entier * <br> --- | 1-4 |  |
| A | US-A-1738573 (E.S. GOODSPEED) <br> * colonne 5, ligne 1 - ligne 28; figures 2, 3, 10 * <br> --- | 1-3 |  |
| A | US-A-1898014 (A.F. KRUMHOLZ) <br> * le document en entier * <br> ----- | 1, 3 |  |

|  |
|---|
| **DOMAINES TECHNIQUES RECHERCHES (Int. Cl.4 )** |
| B23K |

Le présent rapport a été établi pour toutes les revendications

| Lieu de la recherche | Date d'achèvement de la recherche | Examinateur |
|---|---|---|
| LA HAYE | 17 MARS 1989 | ARAN D.D. |

EPO FORM 1503 03.82 (P0402)